(19)

Europäisches Patentamt
European Patent Office
Office européen des brevets

(11)  **EP 2 250 718 B1**

(12)  **EUROPÄISCHE PATENTSCHRIFT**

(45) Veröffentlichungstag und Bekanntmachung des Hinweises auf die Patenterteilung:
**27.09.2017  Patentblatt 2017/39**

(51) Int Cl.:
***H02H 3/093*** *(2006.01)*

(21) Anmeldenummer: **09716896.7**

(22) Anmeldetag: **28.01.2009**

(86) Internationale Anmeldenummer:
**PCT/EP2009/050909**

(87) Internationale Veröffentlichungsnummer:
**WO 2009/109424 (11.09.2009 Gazette 2009/37)**

(54) **SCHUTZSCHALTGERÄT ZUM ÜBERWACHEN DES ELEKTRISCHEN STROMFLUSSES ZU EINEM ELEKTRISCHEN VERBRAUCHER BZW. VERFAHREN ZUR ÜBERWACHUNG DES ELEKTRISCHEN STROMFLUSSES ZU EINEM ELEKTRISCHEN VERBRAUCHER DURCH EIN SCHUTZSCHALTGERÄT**

PROTECTIVE SWITCHING DEVICE FOR MONITORING THE ELECTRICAL CURRENT FLOW TO AN ELECTRICAL USER AND METHOD FOR MONITORING THE ELECTRICAL CURRENT FLOW TO AN ELECTRICAL USER BY WAY OF A PROTECTIVE SWITCHING DEVICE

DISJONCTEUR DE PROTECTION DESTINÉ À SURVEILLER LE COURANT ÉLECTRIQUE PARVENANT À UN CONSOMMATEUR ÉLECTRIQUE ET PROCÉDÉ DE SURVEILLANCE DU COURANT ÉLECTRIQUE PARVENANT À UN CONSOMMATEUR ÉLECTRIQUE PAR UN DISJONCTEUR DE PROTECTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **05.03.2008  DE 102008012605**

(43) Veröffentlichungstag der Anmeldung:
**17.11.2010  Patentblatt 2010/46**

(73) Patentinhaber: **Siemens Aktiengesellschaft 80333 München (DE)**

(72) Erfinder:
- **GRAUPNER, Dirk 08393 Meerane (DE)**
- **SCHMID, Reinhard 93051 Regensburg (DE)**

(56) Entgegenhaltungen:
**EP-A- 0 949 734       WO-A-92/09943 US-B1- 6 292 717**

EP 2 250 718 B1

**Beschreibung**

Die vorliegende Erfindung betrifft ein Schutzschaltgerät zum Überwachen des elektrischen Stromflusses zu einem elektrischen Verbraucher, aufweisend eine Schaltfunktionalität, eine Überstromauslösefunktionalität und eine Kurzschlussauslösefunktionalität, aufweisend einen ersten Mikrokontroller mit einem ersten Eingangssignalfilter. Ferner betrifft die Erfindung ein Verfahren zur Überwachung des elektrischen Stromflusses zu einem elektrischen Verbraucher durch ein Schutzschaltgerät.

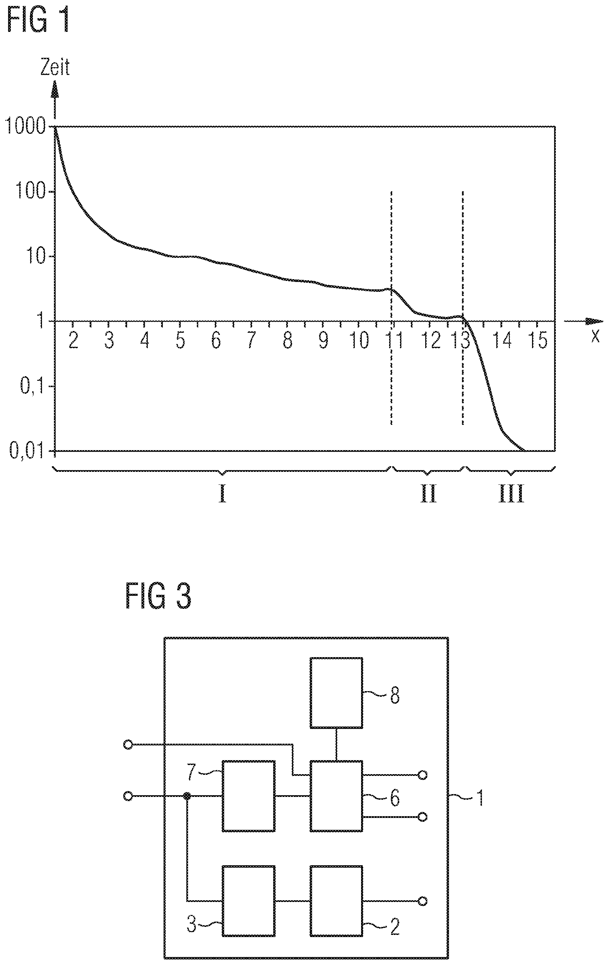

Schutzschaltgeräte zum Überwachen des elektrischen Stromflusses zu einem elektrischen Verbraucher sind beispielsweise Mehrfunktionsniederspannungsschaltgeräte im Sinne der Norm EN 60947-6-2 und Leistungsschalter mit elektronischem Überstromschutz im Sinne der Norm EN 60947-2. Diese werden auf einen sogenannten Einstellstrom ($I_E$) abgestimmt. Dieser sollte dem Bemessungsstrom ($I_N$) der elektrischen Verbraucher entsprechen. Übersteigt der tatsächlich fließende Strom den Einstellstrom, wird je nach Zeitdauer und geflossenem Strom ein Auslösesignal abgesetzt. Die Schutzschaltgeräte trennen entweder im Fall solch einer Überlast den nachgeschalteten Verbraucher von der Versorgung oder melden das Ereignis an eine übergeordnete Stelle weiter. Die Ermittlung der Grenzwerte des Signals wird in der Regel über eine Auslösekennlinie definiert, siehe Fig. 1.

Hierbei werden drei verschiedene Szenarien betrachtet. Übersteigt der tatsächlich fließende Strom relativ gering den Einstellstrom ($I_E$), darf der Strom je nach dessen konkreten Werten noch einige Zeit weiter fließen. Als Grenzwert für eine Auslösung wird ein erster Bereich I der Kennlinie gemäß Fig. 1 herangezogen. Eine derartige Schutzeinrichtung kann auch als Überstromzeitschutzeinrichtung verstanden werden und wird normativ als "abhängig verzögerter Überstromauslöser" nach den Normen EN 60947-6-2 (Kap. 5.7.1.3.2) und EN 60947-1 (Kap. 2.4.24) bezeichnet. Diese abhängig verzögerte Überstromauslösung dient im Allgemeinen dazu, Verbraucher von elektrischer Energie vor thermischen Schäden zu schützen.

Übersteigt der Strom sehr stark den Einstellstrom ($I_E$), muss der Verbraucher möglichst schnell vom Netz getrennt werden. Als Grenzwert für eine Auslösung wird ein zweiter Bereich III der Kennlinie gemäß Fig. 1 herangezogen. Die Schutzeinrichtung arbeitet dann als Kurzschlussschutz und wird normativ als "unverzögerter Kurzschlussauslöser" nach den Normen EN 60947-6-2 (Kap. 5.7.1.3.1) und EN 60947-1 (Kap. 2.4.26) bezeichnet.

Im Übergangsbereich zwischen dem Kurzschlussschutz und dem Überstromzeitschutz kann in elektronischen Schutzgeräten auf Grund der Notwendigkeit des Eigenschutzes ein dritter Bereich II definiert sein, siehe Fig. 1. Dieser kann entweder als "unabhängig verzögerter Kurzschlussauslöser" nach der Norm EN 60947-6-2 (Kap. 5.7.1.3.2) oder als "unabhängig verzögerter Überlastauslöser" nach der Norm EN 60947-6-2 (Kap. 5.7.1.3.1) bzw. nach den Normen EN 60947-1 (Kap. 2.4.26) bzw. EN 60947-1 (Kap. 2.4.24) verstanden werden.

Werden in neuartigen elektronischen Geräten Mikrokontroller verwendet, ergeben sich zahlreiche Vorteile. So können über Firmwarevarianten verschiedene Gerätetypen innerhalb einer zusammengehörigen Familie realisiert werden, ohne dass die hardwareseitige Fertigungstiefe zu groß wird. Mit Hilfe der Kontroller können zahlreiche Sonderfunktionen kostengünstig integriert werden, die Schutzschaltgeräte können besser einstellbar aufgebaut werden und genauer auf die gemessenen Parameter reagieren. Zudem ist oft eine schrittweise Verbesserung der Schutzschaltgeräte ohne kostenintensive Hardwareänderungen, wie ein sog. Relayout, Werkzeugänderungen o.ä., möglich.

Es besteht aber bei derartigen Schutzschaltgeräten das Problem, dass ein unverzögerter Kurzschlussauslöser und ein abhängig verzögerter Überstromauslöser ganz anders geartete Anforderungen stellen.

So muss der abhängig verzögerte Überstromauslöser, auch als Überlastauslöser bezeichnet, in der Lage sein, eine entsprechende $I^2t$-Auslösegrenze gemäß der Kennlinie nach Fig. 1 zu verarbeiten. Nach dem Auslösen des Überlastauslösers kann dieser nach Ablauf der Wiedereinschaltbereitschaftszeit aktiviert werden. Das Ganze hat zur Folge, dass der Überlastauslöser Strom-Zeit-Abhängigkeiten und Zeiträume erfassen und auswerten muss. Dabei müssen auch kurze zwischenzeitliche Abschaltungen die thermischen Vorbelastungen des Verbrauchers berücksichtigen. Als Vorteil dieser Funktion kann der im Verhältnis hohe Zeitvorrat gesehen werden, d.h. die Überlastauslösung ist nicht zeitkritisch.

Der Kurzschlussauslöser muss i.d.R. keine Strom-Zeit-Abhängigkeiten und Zeiträume erfassen. Kurzschlüsse mit sehr niedrigen Restimpedanzen, sog. harte Kurzschlüsse, müssen aber möglichst schnell erfasst und ausgewertet werden. Dabei muss möglichst schnell der Verbraucher vom Netz getrennt werden, um Folgeschäden möglichst zu vermeiden und den Auslöser selbst zu schützen, sog. Eigenschutz. Normativ wird vom jeweiligen Bemessungsausschaltvermögen der Schutzschaltgeräte gesprochen, welche die zum Teil kurzzeitig sehr hohen Energiedichten aushalten müssen. Der dabei entstehende Lichtbogen wird in den Lichtbogenlöschkammern vernichtet.

Dieser Gegensatz zwischen Kurzschlussauslösung und Überlastauslösung hat ganz verschiedene Anforderungen zur Folge, so dass die Verarbeitung in gemeinsamen Gruppen immer mit Kompromissen verbunden sein wird. So muss ein Signaleingangsfilter beiden Ansprüchen genügen. Die geforderten Auflösungen an einen verwendeten Analog-Digital-Wandler sind hoch, da ein weiter Messbereich des Stroms abgedeckt werden muss.

Klassische Überstromschutzeinrichtungen beinhalten ein Bimetall, durch welches der Strom des Verbrauchers fließt. Dieser Strom erwärmt in Abhängigkeit der Stromstärke und der Zeitdauer das Bimetall:

$$\delta Q = I^2 R * t$$

Alternativ kann das Bimetall auch durch indirekte Erwärmung benachbarter Leiter erwärmt werden. Durch die unterschiedlichen Wärmeausdehnungskoeffizienten der Materialien im Bimetall biegt sich dieses durch und stellt eine Meldung zur Weiterverarbeitung bereit oder löst ein entsprechendes Ereignis aus.

Für die o.g. schnelle Kurzschlusserkennung wird bei klassischen Geräten ein magnetisch arbeitender Auslöser verwendet. Wenn der Strom steigt, dann erhöht sich das Magnetfeld in einer dafür ausgelegten Spule. Dieses führt auf Grund der elektromagnetischen Kräfte ab einem bestimmten Grenzwert zu einer Bewegung eines Ankers oder Stößels im Kern der Spule. Üblicherweise löst dieser Anker an einem Schaltschloss bei einem Kurzschlussereignis aus und bringt dann das Schaltschloss zum Ausklinken oder Ausrasten. Es kann also generell gesagt werden, dass in klassischen Geräten, auch wenn beide Funktionen Überlast- und Kurzschlussauslösung vorhanden sind, unterschiedliche elektromechanische Bauteile eingesetzt werden. Diese Lösung ist platzintensiv und teuer.

Neuartige Geräte arbeiten mit Hilfe eines Mikrokontrollers elektronisch. Dabei werden die Signalverläufe der Ströme des Verbrauchers bzw. die Spannungsverläufe digital abgetastet. Dieses zeitquantisierte Signal wird in diskreten Werten abgespeichert. Hier erfolgt eine Analog-Digital-Wandlung. Damit ist es möglich, die Signalverläufe genauer abzubilden und verschiedene Kennlinien bzw. Charakteristika in den Geräten zu hinterlegen. Aus den unterschiedlichen Anforderungen der Kurzschlussauslösung und der Überlastauslösung ergeben sich unterschiedliche Abarbeitungsalgorithmen. Damit sind die Anforderungen an den entsprechenden Mikroprozessor entsprechend hoch. Denkbar sind auch Mischformen, in dem eine Funktion klassisch realisiert wird und die andere elektronisch. Das Dokument US 6 292 717 offenbart ein Schutzschaltgerät gemäß dem Präambel vom Anspruch 1. Aufgabe der vorliegenden Erfindung ist es, ein Schutzschaltgerät und ein Verfahren zum elektronischen Funktionssplitting in Überlastfällen und Kurzschlussfällen in einem Schutzschaltgerät zu schaffen, das einfach und schnell funktioniert und kostengünstig realisierbar ist. Durch das Schutzschaltgerät bzw. das Verfahren soll die Belastung an den eingesetzten Mikrokontroller verringert werden. Ferner soll die Kurzschlusserkennung zur sichereren und schnelleren Auslösung ausgebildet sein.

Diese Aufgaben werden erfindungsgemäß durch ein Schutzschaltgerät mit den Merkmalen gemäß dem unabhängigen Patentanspruch 1 sowie durch ein Verfahren mit den Merkmalen gemäß dem Patentanspruch 9 gelöst. Weitere Merkmale und Details der Erfindung ergeben sich aus den Unteransprüchen, der Beschreibung sowie den Zeichnungen. Merkmale und Details die im Zusammenhang mit dem Schutzschaltgerät beschrieben sind gelten dabei selbstverständlich auch im Zusammenhang mit dem Verfahren, und jeweils umgekehrt.

Gemäß dem ersten Aspekt der Erfindung wird die Aufgabe durch ein Schutzschaltgerät zum Überwachen des elektrischen Stromflusses zu einem elektrischen Verbraucher, aufweisend eine Schaltfunktionalität, eine Überstromauslösefunktionalität und eine Kurzschlussauslösefunktionalität, aufweisend einen ersten Mikrokontroller mit einem ersten Eingangssignalfilter, wobei der erste Mikrokontroller zur Überwachung der Überstromauslösefunktionalität ausgebildet ist, und bei dem ein zweiter Mikrokontroller mit einem zweiten Eingangssignalfilter vorgesehen ist, der zur Überwachung der Kurzschlussauslösefunktionalität ausgebildet ist, wobei die beiden Eingangssignalfilter unterschiedlich ausgelegt sind, und bei dem die Schaltfunktionalität in einem der beiden Mikrokontroller vorgesehen ist, gelöst.

Der Kern der Erfindung liegt darin, dass das Schutzschaltgerät zwei einfache Mikrokontroller, insbesondere mit einer mehrfach abgestuften Kurzschlusserkennung, anstelle eines komplexeren Mikrokontrollers aufweist. Hierdurch kann das Schutzschaltgerät auf die unterschiedlichen Anforderungen der Kurzschlussauslösung und der Überlastauslösung besser und gezielter eingehen. D.h., ein Mikrokontroller ist für die Kurzschlussauslösung zuständig und ein Mikrokontroller für die Überlastauslösung. Die beiden Mikrokontroller können jeweils klein, preiswert und schnell ausgebildet sein. Durch den Einsatz zweier preiswerter, schneller und kleiner Mikrokontroller, entsteht gegenüber einem größeren Mikrokontroller nicht zwangsläufig ein ökonomischer Nachteil. Der Preis eines Mikrokontrollers wird in erster Linie vom benötigten Programmspeicher, i.d.R. ein Flash-Speicher, und von der Gehäusegröße bestimmt. Der benötigte Programmspeicher teilt sich bei der Lösung mit zwei Mikrokontrollern entsprechend auf. Gleiches gilt für den Eingangssignalfilter. Bei den aus dem Stand der Technik bekannten Schutzschaltgeräten, die einen Mikrokontroller und einen Eingangssignalfilter aufweisen, der sowohl für die Überlasterkennung, als auch für die Kurzschlusserkennung zuständig ist, arbeitet der komplexe Mikrokontroller langsam, weil er beide Szenarien, Kurzschluss und Überlast, überprüfen muss. Dies kostet Zeit. Eine schnellstmögliche Kurzschlusserkennung erfordert Eingangssignalfilter, deren Tiefpasscharakter nicht zu stark ausgelegt ist, um steile Flanken im Anstieg möglichst wenig zu bedämpfen. Für die Überlastauslösung ist es aber bedeutsam, Fehler der Abtastung zu vermeiden. Hierzu ist die Erkennung von fallenden und steigenden Werten erforderlich. Auf Grund des zeitunkritischeren Sachverhalts bei der Überlasterkennung ist die Filterung schneller Transienten und Oberwellen besser möglich, d.h. es werden Eingangssignalfilter mit Tiefpasscharakter bzw. Eingangssignalfilter höherer Ordnung benötigt.

Dadurch, dass das Schutzschaltgerät zwei Mikrokontroller aufweist, kann jedem Mikrokontroller ein eigener spezieller Eingangssignalfilter zugeordnet werden. Dies muss ebenfalls kein wirtschaftlicher Nachteil sein, da die beiden einzelnen, speziellen Eingangssignalfilter für sich gesehen einfacher ausgebildet sein können, als ein einziger komplexer Eingangssignalfilter, der sowohl die Überlasterkennung, als auch die Kurzschlusserkennung abdecken muss.

Der erste Mikrokontroller mit dem ersten Eingangssignalfilter dient zur Überwachung der Überstromlast, der zweite Mikrokontroller mit dem zweiten Eingangssignalfilter dient zur Überwachung eines Kurzschlusses. Dabei ist der zweite Eingangssignalfilter des zweiten Mikrokontrollers bevorzugt für eine schnellstmögliche Kurzschlusserkennung ausgelegt, d.h. der Tiefpasscharakter des zweiten Eingangssignalfilters ist schwach ausgelegt, um steile Flanken im Anstieg möglichst wenig zu bedämpfen. Der erste Eingangssignalfilter des ersten Mikrokontrollers ist bevorzugt für eine Überlasterkennung ausgelegt. D.h., der erste Eingangssignalfilter kann Störungen besser bedämpfen und schnelle Transienten und Oberwellen besser herausfiltern. Daher ist der Tiefpasscharakter des ersten Eingangssignalfilters des ersten Mikrokontrollers bevorzugt deutlich höher ausgeprägt, als der Tiefpasscharakter des zweiten Eingangssignalfilters des zweiten Mikrokontrollers.

Die beiden Mikrokontroller und entsprechend die beiden Eingangssignalfilter arbeiten völlig unabhängig voneinander.

Die Schaltfunktionalität zum betriebsmäßigen Schalten des Schutzschaltgerätes kann wahlweise in einem der beiden Mikrokontroller integriert sein. Bevorzugt ist die Schaltfunktionalität zum betriebsmäßigen Schalten des Schutzschaltgerätes jedoch in dem ersten Mikrokontroller, der für die Überstromauslösung zuständig ist, integriert. D.h., vorteilhafterweise weist der erste Mikrokontroller die Schaltfunktionalität und die Überstromauslösefunktionalität auf.

Insbesondere bevorzugt ist ein Schutzschaltgerät, bei dem der zweite Mikrokontroller einen Komparator und wenigstens zwei dem Komparator nachgeschaltete, nacheinander angeordnete, Messeinrichtungen und Vergleichseinheiten zur Messung der Stromstärke bzw. der Spannung und zum Vergleichen der gemessenen Stromstärke bzw. der Spannung mit Referenzstromstärken bzw. Referenzspannungen und eine den Messeinrichtungen nachgeschaltete Auslösesignaleinheit aufweist. Bei einem derartigen Schutzschaltgerät ist die Kurzschlussauslösung zur sichereren und schnelleren Auslösung geschachtelt aufgebaut. Die Messeinrichtungen weisen jeweils einen Messalgorithmus auf, mittels welchem die aufgetretenen Spannungen gemessen werden können.

Bei einem Kurzschluss tastet der Komparator den Wert des Eingangssignals, d.h. die angefallene Stromstärke bzw. die angefallene Spannung sehr schnell ab, d.h. der Komparator schlägt sehr schnell an. Hierdurch kann bei Auftritt eines Kurzschlusses sehr schnell die Stromverbindung von einer Versorgung zu einem Verbraucher getrennt werden.

Das Eingangssignal, insbesondere die Spannung, wird von dem Komparator mit einer Referenzspannung verglichen. Je nachdem, ob die Spannung größer oder kleiner als die Referenzspannung ist, reagiert der Komparator unterschiedlich. Stellt der Komparator fest, dass die Eingangsspannung über einer bestimmten Eingangsspannung liegt, löst dieser ein Signal aus, welcher softwareseitig einen sogenannten Komparatorinterrupt zur Folge hat, so dass in eine Interruptroutine eingesprungen wird. In dieser können im Mikrokontroller vorhandene Messeinrichtungen bzw. Messalgorithmen benutzt werden, um die aufgetretene Spannung nachzumessen. Vorteilhafterweise wird softwareseitig ein Kurzschlussalgorithmus durch den Komparatorinterrupt ausgelöst, da der Komparator sehr schnell reagiert. Idealerweise wird ab dem 13-fachen Wert des Bemessungsstroms (IN) der Komparatorinterrupt ausgelöst. Ab welchem Wert der Komparatorinterrupt ausgelöst wird, kann aber auch individuell bei dem Schutzschaltgerät festgelegt werden. Der Kurzschlussalgorithmus zeigt nun auf die entsprechende Phase und eine erste Messeinrichtung bzw. ein erster Messalgorithmus misst den Strom nach. Stellt die erste Messeinrichtung fest, dass die ermittelte Stromstärke über einer ersten Referenzstromstärke, die relativ hoch angesetzt ist, liegt, setzt die erste Messeinrichtung bzw. der erste Messalgorithmus ein Signal zum Erzeugen eines Auslösesignals ab. Die erste Messeinrichtung arbeitet relativ schnell, um festzustellen, ob die aufgetretene Stromstärke einen hohen Wert, d.h. die erste Referenzstromstärke, überschritten hat. Vorteilhafterweise sind im Falle von ungenauen Messungen besonders schnelle Messungen möglich. Beispielsweise kann die im Kontroller vorhandene erste Messeinrichtung übertaktet werden. Die erste Referenzstromstärke liegt beispielsweise bei dem 52-fachen Wert der Bemessungsstromstärke. Stellt die erste Messeinrichtung bzw. der erste Messalgorithmus fest, dass die aufgetretene Stromstärke den Wert der ersten Referenzstromstärke nicht überschritten hat, sendet die erste Messeinrichtung bzw. der erste Messalgorithmus der zweiten Messeinrichtung ein Signal, so dass die zweite Messeinrichtung bzw. der zweite Messalgorithmus die Stromstärke nochmals nachmisst und mit einer zweiten Referenzstromstärke, die niedriger als die erste Referenzstromstärke ist, vergleicht. Stellt die zweite Messeinrichtung bzw. der zweite Messalgorithmus fest, dass die gemessene Stromstärke die zweite Referenzstromstärke überschreitet, setzt die zweite Messeinrichtung bzw. der zweite Messalgorithmus ein Signal zum Erzeugen eines Auslösesignals ab. Stellt die zweite Messeinrichtung bzw. der zweite Messalgorithmus fest, dass die gemessene Stromstärke die zweite Referenzstromstärke nicht überschreitet, setzt die zweite Messeinrichtung kein Signal, insbesondere kein Auslösesignal, ab.

Sinn der geschachtelten Messeinrichtungen bzw. der geschachtelten Messalgorithmen und des Komparatoreinsprungs bei Ermittlung der Stromstärken ist, dass bei Auftreten eines sehr hohen Stromes, d.h. eines Kurzschlussstromes, sehr schnell ein Signal zum Auslösen bzw. Trennen der Stromverbindung erzeugt wird. Die erste Messeinrichtung bzw. der erste Messalgorithmus überprüft die aufgetretene Stromstärke sehr schnell, aber auch etwas grob. Wird durch die erste Messeinrichtung bzw. den ersten Messalgorithmus jedoch festgelegt, dass der ermittelte Strom sehr hoch ist, d.h. über der ersten Referenzstromstärke, liegt, löst die erste Messeinrichtung direkt das Auslösesignal aus, da der Stromfluss schnellstmöglich unterbrochen werden soll. Liegt die Stromstärke unterhalb der ersten hohen Referenzstromstärke, wird die Stromstärke nochmals genauer durch die zweite Messeinrichtung bzw. den zweiten Messalgorithmus nachgemessen. Auf Grund des niedrigeren Stromes bei der Messung in der zweiten Messeinrichtung, steht auch mehr Zeit zur Messung zur Verfügung. Die zweite Messeinrichtung misst langsamer und daher genauer. Durch diese geschachtelte Messung kann sichergestellt werden, dass der zweite Mikrokontroller nur dann auslöst, wenn dies auch wirklich erforderlich ist. Ein derartiges Schutzschaltgerät trennt die Stromverbindung nur, wenn wirklich ein Strom aufgetreten ist, der oberhalb einer zweiten Referenzstromstärke liegt. Daher weist die zweite Messeinrichtung bzw. der zweite Messalgorithmus bevorzugt eine höhere Auflösung als die vorgeschaltete erste Messeinrichtung bzw. der vorgeschaltete erste Messalgorithmus auf. Liegt die aufgetretene Stromstärke unterhalb der zweiten Referenzstromstärke, kann in den ursprünglichen Zustand zurückgekehrt werden.

Der zweite Mikrokontroller überprüft sehr schnell, ob ein Kurzschluss vorliegt. Durch die geschachtelte Messung kann der zweite Mikrokontroller sehr schnell und genau feststellen, ob ein Kurzschluss vorliegt. Da bei Auftritt einer Überlast die Messung nicht so zeitkritisch ist, wie bei einem Kurzschluss, kann der erste Mikrokontroller genau prüfen, in wie weit eine Überlast vorgelegen hat.

Aufgrund der Nachmessung der Stromstärke durch die zweite Messeinrichtung bzw. den zweiten Messalgorithmus wird der Störabstand erhöht und die Verfügbarkeit der abgesicherten Anlage sichergestellt. Die abgesicherte Anlage bzw. der abgesicherte Verbraucher wird durch die gesonderte Kurzschlussmessung sicher vom Netz getrennt, wenn ein sehr hoher Strom auftritt, gleichzeitig ermöglicht der zweite Mikrokontroller aber auch, dass keine unnötige Abschaltung stattfindet, wenn festgelegt wird, dass die aufgetretene Stromstärke bzw. die Spannungsmessung an den Messeinrichtungen lediglich durch Störungen oder Einkopplungen zustande kam.

Besonders bevorzugt ist ein Schutzschaltgerät, bei dem die erste und die zweite Messeinrichtung jeweils Analog-Digital-Wandler aufweisen. Die Analog-Digital-Wandlung ist jedoch am zeitaufwändigsten im Mikrokontroller. D.h. ein Analog-Digital-Wandler in einem Mikrokontroller arbeitet i. d. R. mit dem Verfahren der sukzessiven Approximation und ist verhältnismäßig langsam. Wird auf die Auflösung verzichtet, ist es möglich, den Analog-Digital-Wandler, hier die erste Messeinrichtung, schnell zu betreiben, sozusagen zu übertakten. Da sehr hohe Ströme, d.h. sehr harte Kurzschlüsse, Werte liefern, welche die Auslöseschwelle, d.h. die erste Referenzstromstärke, extrem übersteigen, kann in diesem Fall zugunsten der damit möglichen kürzeren Messzeit auch auf eine hohe Auflösung verzichtet werden. Liegen die Messwerte unterhalb einer bestimmten Schwelle, d.h. der ersten Referenzstromstärke, liegt ein weniger harter Kurzschluss vor, so muss noch einmal mit höherer Genauigkeit durch die zweite Messeinrichtung nachgemessen werden. In diesem Fall steht aber auch etwas mehr Zeit zur Verfügung.

Denkbar sind zur Detektion der exakt aufgetretenen Stromstärken unterstützende Messungen in bestimmten festgelegten Zeitrastern. Sehr harte Kurzschlüsse haben Stromverläufe zur Folge, welche das Delta, d.h. die Differenz zwischen zwei Messungen gleicher Zeitabstände, größer werden lässt, als der typische Signalverlauf im normalen Betriebsverhalten zuließe.

Die Auflösung der ersten Messeinrichtung bzw. des ersten Messalgorithmus ist geringer, als die Auflösung der zweiten Messeinrichtung bzw. des zweiten Messalgorithmus. Dabei können die Auflösungen verschiedenste Werte aufweisen. Bevorzugt ist beispielsweise ein Schutzschaltgerät, bei dem bei der Analog-Digital-Wandlung beim ersten Messalgorithmus 6- bis 8-Bit-Auflösung und beim zweiten Messalgorithmus eine 9- bis 10-Bit-Auflösung benutzt werden. Je geringer die benötigte Auflösung des Analog-Digital-Wandlers ist, desto ungenauer misst er die Stromstärke. Die Genauigkeit des Analog-Digital-Wandlers hängt also von der Anzahl der Arbeitstakte, der so genannten Bit-Auflösung, ab. Eine Analog-Digital-Wandlung, bei dem 8-Bit-Auflösung benutzt wird, ist schneller, als eine Analog-Digital-Wandlung, bei der 10-Bit-Auflösung benutzt wird.

Ferner ist ein Schutzschaltgerät bevorzugt, bei dem der Tiefpasscharakter des ersten Eingangssignalfilters des ersten Mikrokontrollers höher ausgelegt ist, als der Tiefpasscharakter des zweiten Eingangssignalfilters des zweiten Mikrokontrollers. Dies ermöglicht, dass der zweite Mikrokontroller bei Auftreten eines hohen Stromes, d.h. eines Kurzschlusses, den Strom schnell misst, während der erste Mikrokontroller langsam und sicher eine ggf. aufgetretene Überlast messen kann.

Das Schutzschaltgerät kann beispielsweise ein Mehrfunktionsniederspannungsschaltgerät oder ein Leistungsschalter mit elektronischem Überstromschutz sein. Insbesondere Mehrfunktionsniederspannungsschaltgeräte im Sinne der Norm EN 60947-6-2 und Leistungsschalter mit elektronischem Überstromschutz im Sinne der Norm EN 60947-2 sind besonders bevorzugt derart ausgebildet. Derartige Schutzschaltgeräte sichern eine nachgeschaltete Anlage oder einen nachgeschaltete Verbraucher besonders sicher ab.

Gemäß dem zweiten Aspekt der Erfindung wird die Aufgabe durch ein Verfahren zur Überwachung des elektrischen Stromflusses zu einem elektrischen Verbraucher durch ein Schutzschaltgerät, bei dem ein erster Eingangssignalfilter eines ersten Mikrokontrollers den Signalverlauf des Stromflusses bzw. der Spannung überwacht und der erste Mikrokontroller bei Feststellung einer Überlast ein Fehlersignal und/oder ein Auslösesignal erzeugt, und bei dem ein zweiter Eingangssignalfilter eines zweiten Mikrokontrollers den Signalverlauf des Stromflusses bzw. der Spannung überwacht und der zweite Mikrokontroller bei Feststellung eines Kurzschlusses ein Auslösesignal erzeugt, wobei die beiden Eingangssignalfilter unterschiedlich ausgelegt sind und wobei der Stromfluss nach Erzeugung eines Auslösesignal unterbrochen wird.

Ein derartiges Verfahren zur Überwachung des elektrischen Stromflusses zu einem elektrischen Verbraucher durch ein Schutzschaltgerät ermöglicht die elektronische Funktionssplitting in Überlastfällen und Kurzschlussfällen. Durch das Schutzschaltgerät bzw. das Verfahren wird die Belastung an den eingesetzten Mikrokontroller verringert.

Der zweite Mikrokontroller ist für die Kurzschlussauslösung zuständig und der erste Mikrokontroller für die Überlastauslösung. Der zweite Mikrokontroller kann sehr schnell feststellen, ob ein Kurzschluss vorliegt. Hierfür ist dieser speziell ausgelegt. D.h., der Eingangssignalfilter des zweiten Mikrokontrollers kann sehr schnell auf hohe Stromstärken reagieren. Der erste Eingangssignalfilter des ersten Mikrokontrollers kann Überlastfälle besser feststellen.

Insbesondere bevorzugt ist ein Verfahren, bei dem der zweite Mikrokontroller einen Komparator benutzt, wobei der Komparator den Signalverlauf des Stromflusses bzw. den Spannungsverlauf überwacht, und

bei dem bei Überschreitung einer bestimmten Eingangsstromstärke bzw. Eingangsspannung eine erste, dem Komparator nachgeschaltete, Messeinrichtung die Stromstärke nachmisst und eine erste Vergleichseinheit diese mit einer ersten Referenzstromstärke vergleicht, und bei dem bei Feststellung, dass die gemessene Stromstärke die erste Referenzstromstärke überschreitet, die erste Messeinrichtung ein Signal zum Erzeugen eines Auslösesignals absetzt, oder bei dem bei Feststellung, dass die gemessene Stromstärke die erste Referenzstromstärke nicht überschreitet, die erste Messeinrichtung eine nachgeschaltete zweiten Messeinrichtung anstößt, so dass die zweite Messeinrichtung die Stromstärke nochmals nachmisst und eine zweite Vergleicheinheit diese mit einer zweiten Referenzstromstärke vergleicht, wobei bei Feststellung, dass die gemessene Stromstärke die zweite Referenzstromstärke überschreitet, die zweite Messeinrichtung ein Signal zum Erzeugen eines Auslösesignals bereitstellt, oder bei dem bei Feststellung, dass die gemessene Stromstärke die zweite Referenzstromstärke nicht überschreitet, die zweite Messeinrichtung kein Signal zum Erzeugen eines Auslösesignals bereitstellt.

Der Komparator stellt sehr schnell fest, dass eine hohe Stromstärke vorliegt. Hierzu vergleicht der Komparator ständig den Wert des Eingangssignals. Liegt eine hohe Stromstärke vor, spricht der Komparator sehr schnell an. Das Eingangssignal, insbesondere die Spannung, wird von dem Komparator mit einer Referenzspannung verglichen. Stellt der Komparator fest, dass die Eingangsspannung über einem bestimmten Spannungspegel liegt, löst dieser eine Alorithmenunterbrechung, den sogenannten Komparatorinterrupt, aus. Die untergeordnete erste Messeinrichtung bzw. der untergeordnete erste Messalgorithmus misst daraufhin die aufgetretene Spannung nach. Der Komparatorinterrupt löst dabei beispielsweise ab dem 13-fachen Wert des Bemessungsstroms ($I_N$) aus. Der Algorithmus zeigt nun auf die entsprechende Phase des Drehstroms, beispielsweise in einem Drehstromnetz, und der erste Messalgorithmus misst den Strom nach. Der Grundalgorithmus weist eine Schleife auf, die ermöglicht, dass die Gleichstromanteile aller Phasen, bei einem Drehstromnetz sind dies drei Phasen, nacheinander durch den Komparator und damit der Kurzschlusserkennung abgetastet werden. Dies ermöglicht eine gemeinsame Bewertung.

Stellt die erste Messeinrichtung bzw. der erste Messalgorithmus fest, dass die ermittelte Stromstärke über einer ersten Referenzstromstärke liegt, setzt die erste Messeinrichtung bzw. der erste Messalgorithmus ein Signal zum Erzeugen eines Auslösesignals ab. Die erste Messeinrichtung bzw. der erste Messalgorithmus arbeitet relativ schnell, um festzustellen, ob die aufgetretene Stromstärke die erste hohe Referenzstromstärke überschritten hat. Dabei benutzt die erste Messeinrichtung eine geringere Auflösung als der Analog-Digital-Wandler im Mikrokontroller erlaubt. Stellt die erste Messeinrichtung bzw. der erste Messalgorithmus fest, dass die aufgetretene Stromstärke den Wert der ersten Referenzstromstärke nicht überschritten hat, wird die zweite Messeinrichtung bzw. der zweite Messalgorithmus angestoßen. Die zweite Messeinrichtung bzw. der zweite Messalgorithmus misst die Stromstärke nochmals genauer nach und vergleicht diese mit einer zweiten Referenzstromstärke, die deutlich niedriger als die erste Referenzstromstärke ist. Stellt die zweite Messeinrichtung bzw. der zweite Messalgorithmus fest, dass die gemessene Stromstärke die zweite Referenzstromstärke überschreitet, wird ein Signal zum Erzeugen eines Auslösesignals abgesetzt. Stellt die erste Messeinrichtung bzw. der zweite Messalgorithmus fest, dass die gemessene Stromstärke die zweite Referenzstromstärke nicht überschreitet, leitet die zweite Messeinrichtung bzw. der zweite Messalgorithmus kein Signal zum Erzeugen eines Auslösesignals weiter. Die Überprüfung, ob eine Überlast vorgelegen hat, wird durch den ersten Mikrokontroller durchgeführt.

Bei dem geschachtelten Messverfahren kann das Schutzschaltgerät sehr schnell die Stromverbindung trennen, wenn festgestellt wird, dass ein Kurzschlussstrom vorliegt. Andererseits kann durch das Verfahren fehlerarm festgestellt werden, wie stark der aufgetretene Fehlerstrom wirklich ist. Liegt kein harter Kurzschluss vor, so überprüft die zweite Messeinrichtung bzw. der zweite Messalgorithmus die genaue Stärke des Fehlerstroms, um die nachgeschaltete Anlage bzw. den nachgeschalteten Verbraucher nicht unnötig abzuschalten. Damit erhöht sich die Verfügbarkeit einer Anlage. Stellt die zweite Messeinrichtung bzw. der zweite Messalgorithmus fest, dass die Stärke des Fehlerstroms zwischen der ersten Referenzstromstärke und der zweiten Referenzstromstärke liegt, d.h., dass ein weniger harter Kurzschluss vorliegt, so trennt der zweite Mikrokontroller aber auch den Stromfluss. Die zweite Messeinrichtung bzw. der zweite Messalgorithmus hat sichergestellt, dass definitiv ein Kurzschluss, aber ein weniger harter Kurzschluss, vorlag. Stellt die genauere Messung der zweiten Messeinrichtung fest, dass kein Kurzschluss vorlag, obwohl der Komparator auf Grund einer Einkopplung mehr als 13 x IN erkannte, reagiert der zweite Mikrokontroller gar nicht, sondern überlässt evtl. Reaktionen auf Fehlerströme dem ersten Mikrokontroller, der über genaue Kenntnisse der exakten Stromstärken und deren Zeitverläufe sowie der Historie der vorhin genannten Größen verfügt.

Die erste Messeinrichtung bzw. der erste Messalgorithmus ermittelt die aufgetretene Stromstärke sehr schnell, aber auch etwas ungenau. Liegt eine sehr hohe Stromstärke vor, beispielsweise über dem 52-fachen Wert der Bemessungsstromstärke, reicht die ungenaue Messung der ersten Messeinrichtung bzw. des ersten Messalgorithmus jedoch aus, um zu entscheiden, dass der Stromfluss schnellstmöglich getrennt wird. Eine genauere Überprüfung der Stromstärke ist bei sehr hohen Werten nicht mehr erforderlich. Liegt die gemessene Stromstärke unterhalb der ersten Referenzstromstärke, d.h., beispielsweise unterhalb des 52-fachen Wertes der Bemessungsstromstärke, erfolgt eine genauere zweite Messung durch die zweite Messeinrichtung bzw. den zweiten Messalgorithmus. Die zweite Messeinrichtung bzw. der zweiten Messalgorithmus misst langsamer und daher genauer. Stellt die zweite Messeinrichtung bzw. der zweiten Messalgorithmus fest, dass die Fehlerstromstärke unter der zweiten Referenzstromstärke liegt, führt der zweite Mikrokontroller gar keine weitere Handlung durch, sondern überlässt diese dem ersten Mikrokontroller der parallel ebenfalls den aufgetretenen Fehlerstrom überwacht bzw. überprüft. Da die beiden Mikrokontroller unabhängig voneinander arbeiten, trennt der erste Mikrokontroller bei Feststellung, dass ein Überstromereignis aufgetreten ist, den Verbraucher vom Netz. Die Stromverläufe werden in festen Zeiteinheiten in einem Speicher, der dem ersten Mikrokontroller zugeordnet ist, abgelegt.

Bevorzugt ist ein Verfahren, bei dem das Schutzschaltgerät zum Durchführen des Verfahrens gemäß einem Schutzgerät nach dem ersten Aspekt der Erfindung ausgebildet ist. Ein derartiges Schutzgerät ist besonders zur Durchführung des Verfahrens geeignet.

Des Weiteren ist ein Verfahren bevorzugt, bei dem ein erster Messalgorithmus der ersten Messeinrichtung mit einer geringeren Auflösung misst, als ein nachgeschalteter zweiter Messalgorithmus der zweiten Messeinrichtung.

Der erste und der zweite Messalgorithmus benutzen bevorzugt jeweils eine Analog-Digital-Wandlung. Insbesondere benutzt die Analog-Digital-Wandlung des ersten Messalgorithmus eine 4- bis 8-Bit-Auflösung und die Analog-Digital-Wandlung des zweiten Messalgorithmus eine 9- oder 10-Bit-Auflösung.

Ferner ist ein Verfahren bevorzugt, bei dem wenigstens einer der Messalgorithmen den Anstieg, d. h. ein sog. Delta, des Stromes benutzt, um ein Kurzschlussereignis sicher zu detektieren.

Die eingesetzten Mikrokontroller sind bevorzugt frei programmierbare Mikrokontroller, vorzugsweise sog. RISC.

Die Erfindung wird nun anhand eines nicht ausschließlichen Ausführungsbeispiels, unter Bezugnahme auf die beiliegende Zeichnungen, näher erläutert. Es zeigen:

Figur 1    eine typische Auslösekennlinie zur Ermittlung der Grenzwerte des Eingangssignals;

Figur 2    eine schematische Darstellung eines Algorithmus in einem zweiten Mikrokontrollers eines Schutzschalt-gerätes mit einer geschachtelten Kurzschlusserkennung;

Figur 3    die schematische Darstellung eines Schutzschaltgerätes mit zwei unabhängig arbeitenden Mikrokontrollern.

Fig. 1 zeigt, wie schon in der Beschreibungseinleitung ausgeführt, eine typische Auslösekennlinie zur Ermittlung der Grenzwerte des Eingangssignals, d.h. der Eingangsspannung als Abbild des Betriebsstroms eines Verbrauchers. Anhand der Auslösekennlinie kann entschieden werden, ob ein abhängiger verzögerter Überstrom, ein unabhängiger verzögerter Überstrom oder ein unverzögerter Kurzschlussstrom vorliegt. Die drei verschiedenen Szenarien sind in Fig. 1 dargestellt.

Das Schutzschaltgerät ist auf einen sogenannten Einstellstrom ($I_E$) abgestimmt. Dieser entspricht vorteilhafterweise dem Bemessungsstrom ($I_N$) der abgesicherten elektrischen Verbraucher. Auf der y-Achse ist die Stromstärke, auf der x-Achse die Zeit zur Auslösung dargestellt. Bei einer Überlast oder einem Kurzschluss steigt die Stromstärke an.

Übersteigt der tatsächlich fließende Strom den Einstellstrom ($I_E$) bzw. den Bemessungsstrom ($I_N$), wird je nach Zeitdauer und geflossenem Strom durch einen der beiden Mikrokontroller des Schutzschaltgerätes ein Auslösesignal abgesetzt.

Die Ermittlung der Grenzwerte des Eingangssignals wird über die Auslösekennlinie definiert, siehe Fig. 1. Wie bereits in der Beschreibungseinleitung erwähnt, ist die Auslösekennlinie in drei Bereiche I, II, III unterteilt. Der erste Bereich I stellt den "abhängig verzögerten Überstrombereich" dar. Der tatsächlich fließende Strom liegt in dem ersten Bereich I zwischen dem einfachen und dem 11-fachen Werte der Bemessungsstromstärke ($I_N$). Bei derartigen Stromstärken darf der Strom noch einige Zeit weiter fließen. Der Stromfluss wird bei derartigen Stromstärken in der Regel nach einiger Zeit unterbrochen, wenn der entsprechende $I^2t$-Wert überschritten ist, um den Verbraucher vor thermischen Schäden zu schützen.

Der dritte Bereich III stellt den "unverzögerter Kurzschlussbereich" dar. Liegt die aufgetretene Stromstärke über einer Eingangsstromstärke, i. d. R. dem 13-fachen Wert der Bemessungsstromstärke ($I_N$), so muss der Verbraucher möglichst schnell vom Netz getrennt werden.

Zwischen dem unverzögerten Kurzschlussbereich III und dem abhängig verzögerten Überstrombereich I liegt der so genannte Übergangsbereich II. Im Übergangsbereich II liegt in diesem Ausführungsbeispiel eine Stromstärke vor, die zwischen dem 11-fachen und dem 13-fachen Wert der Bemessungsstromstärke ($I_N$) liegt.

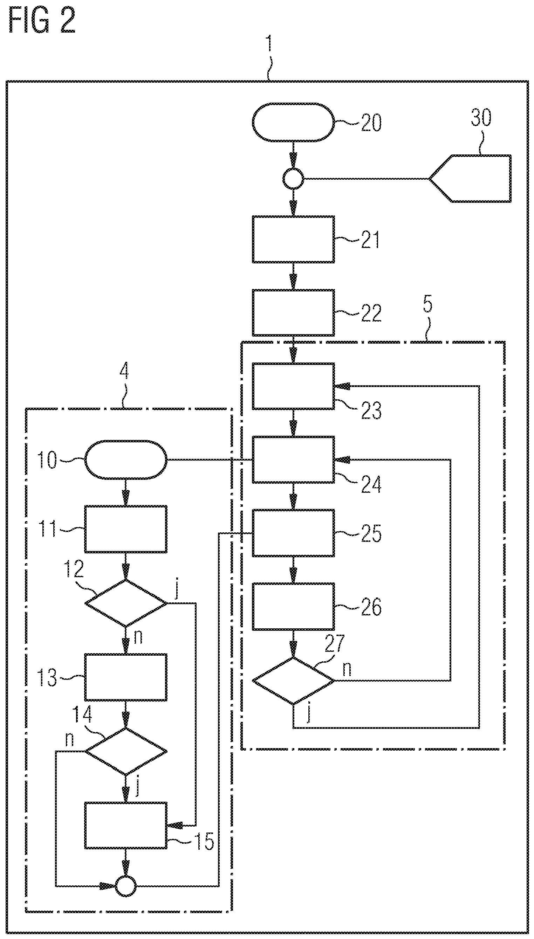

In der Fig. 2 ist schematisch ein Ablauf der Kurzschlusserkennung in dem zweiten Mikrokontroller 2 eines Schutzschaltgerätes 1 mit einer geschachtelten Kurzschlusserkennung 4 dargestellt. Nach dem Start 20 des zweiten Mikrokontrollers 2 werden bestimmte erforderliche Parameter aus der Hardware 30 des zweiten Mikrokontrollers 2 bzw. des Schutzschaltgerätes 1 eingelesen. Nach einer Vordefinitionsstufe 21 (diese kann entfallen) wird der zweite Mikrokontroller 2 in einer Initialisierungsstufe 22 initialisiert und die Phase in der Schalteinheit 23 auf 1 gesetzt. Die verschiedenen Stufen 23-27 sind Teil einer Schleife 5, die dafür sorgt, dass alle Phasen, beispielsweise alle drei Phasen eines Netzes, nacheinander überprüft werden. Nachdem die Phase auf 1 gesetzt ist, wird in einer Zeiteinheit 24 die Zeitfrequenz bestimmt, mit der der Strom bzw. die Spannung abgetastet wird. Stellt der Komparator 10 fest, dass ein Fehlerstrom bzw. eine Fehlerspannung vorliegt, schlägt dieser an. D.h., vorteilhafterweise wird softwareseitig der Kurzschlussalgorithmus über einen Komparatorinterrupt ab den 13-fachen Wert der Bemessungsstromgrenze ausgelöst, da der Komparator 10 sehr schnell ist. Der Kurzschlussalgorithmus zeigt nun auf die entsprechende Phase, zunächst Phase 1, und misst den Strom durch die erste Messeinrichtung bzw. den ersten Messalgorithmus 11 nach. Auf Grund der Nachmessung durch die zweite Messeinrichtung bzw. den zweiten Messalgorithmus 13 wird der Störabstand erhöht und die Verfügbarkeit der Anlage sichergestellt. Am zeitaufwändigsten ist im zweiten Mikrokontroller 2 die Analog-Digital-Wandlung in den Messeinrichtungen 11, 13. Diese arbeitet mit dem Verfahren der sukzessiven Approximation und ist verhältnismäßig zeitaufwändig. Verzichtet man auf Auflösung, ist es möglich, den Analog-Digital-Wandler schneller zu betreiben, d.h. zu übertakten. Da sehr hohe Ströme, d.h. sehr harte Kurzschlüsse, Werte liefern, welche die Auslöseschwelle extrem übersteigen, kann in diesem Fall zugunsten der damit möglichen kürzeren Messzeit auch auf Auflösung verzichtet werden. Liegen die Messwerte unterhalb einer bestimmten Schwelle (weniger harter Kurzschluss), muss noch einmal mit höherer Genauigkeit nachgemessen werden. In diesem Fall steht auch etwas mehr Zeit zur Verfügung. D.h., die erste Messeinrichtung bzw. der erste Messalgorithmus 11 misst den Strom nach. In einer ersten Vergleichseinheit 12 wird überprüft, ob der aufgetretene Strom eine höhere Stromstärke aufweist, als eine erste Referenzstromstärke. Die erste Referenzstromstärke ist relativ hoch, beispielsweise liegt sie bei dem 52-fachen Wert der Bemessungsstromstärke. Liegt die gemessene Stromstärke über der ersten Referenzstromstärke wird dies direkt der Auslöseeinheit 15 weitergeleitet, die ein Auslösesignal erzeugt. In einem fremdversorgten System wird in der Schleife 5 eine Phase weitergeschaltet, so dass auch die Stromanteile der nächsten Phase, hier der Phase 2, durch die Kurzschlusserkennung 4 überprüft werden. So können alle Phasen einer Stromleitung nacheinander überprüft und eine gemeinsame Bewertung durchgeführt werden. Stellt die erste Vergleichseinheit 12 fest, dass die Stromstärke, die die erste Messeinrichtung bzw. der erste Messalgorithmus 11 gemessen hat, unter der ersten Referenzstromstärke liegt, so misst die zweite Messeinrichtung bzw. der zweite Messalgorithmus 13 die Stromstärke nochmals, langsamer aber genauer, nach. Liegt die von der zweiten Messeinrichtung bzw. dem zweiten Messalgorithmus 13 gemessene Stromstärke über einer zweiten Referenzstromstärke, wird dies der Auslöseeinheit 15 weitergeleitet, die ein Auslösesignal erzeugt. Die zweite Referenzstromstärke ist niedriger als die erste Referenzstromstärke. Vorteilhafterweise liegt die zweite Referenzstromstärke bei dem 13-fachen Wert der Bemessungsstromstärke. Stellt die zweite Vergleichseinheit 14 fest, dass die genauer gemessene Stromstärke unter der zweiten Referenzstromstärke liegt, wird die Auslöseeinheit 15 umgangen, so dass kein Auslösesignal ausgelöst wird. Durch die Schleife 5 wird sichergestellt, dass alle Phasen einer Leitung überprüft werden. Stellt die Kurzschlusserkennung 4 fest, dass in keiner Phase ein Strom mit einer Stromstärke, die über der zweiten Referenzstromstärke liegt, so löst der zweite Mikrokontroller 2 nicht aus.

Parallel zu dem zweiten Mikrokontroller 2 weist das Schutzschaltgerät 1 einen ersten Mikrokontroller 6 auf, der zur Überprüfung einer Überlast ausgelegt ist. Da die Überprüfung auf das Vorliegen einer Überlast nicht so zeitkritisch ist, wie bei einer Kurzschlusserkennung, kann ein anderer Eingangsfilter 7 bei der Überlasterkennung im ersten Mikrokontroller 6 eingesetzt werden, als die zweiten Eingangssignalfilter 3 bei der Kurzschlusserkennung 4 des zweiten Mikrokontrollers 2, siehe Fig. 3.

In derartigen Schutzschaltgeräten kann die Funktion zum betriebsmäßigen Schalten in einem der Mikrokontroller, vorzugsweise in dem ersten Mikrokontroller 6, der für die Überlastauslösung zuständig ist, integriert werden.

Denkbar sind zur Detektion unterstützende Messungen in bestimmten festgelegten Zeitrastern. Sehr harte Kurzschlüsse haben Stromverläufe zur Folge, welche das Delta, d.h. die Differenz zwischen zwei Messungen gleicher Zeitabstände, größer werden lässt, als der typische Signalverlauf im normalen Betriebsverhalten zuließe.

Die erfindungsgemäße technische Lösung der Schutzschaltgeräte erlaubt auf die unterschiedlichen Anforderungen der Kurzschluss- und Überlastauslösung besser einzugehen.

Auf Grund des Vorhandenseins preiswerter, schneller und kleiner Mikrokontroller, muss bei Einsatz von zwei kleineren Mikrokontrollern 2, 6 gegenüber einem größeren Mikrokontroller nicht zwangsläufig ein ökonomischer Nachteil entstehen. Im Gegenteil, die Mikrokontroller können einfacher und dadurch kostengünstiger ausgebildet sein, da sie lediglich jeweils ein Szenario, Überlast oder Kurzschluss, abdecken müssen.

Die Softwarealgorithmen der Kurzschlussauslösung können entsprechend schnell ausgelegt werden. In eine entsprechende Interruptroutine kann beim Kurzschlussereignis sofort eingesprungen werden, ohne dass der zweite Mikrokontroller 2 zuvor zu viele Daten und Rücksprungadressen zwischenspeichern muss. Die Softwarealgorithmen der Überlastauslösungen können parallel weiter arbeiten und die entsprechende Daten ($I^2t$) ablegen. Das wäre z.B. bei einer Fehlauslösung, d.h. der Komparator 10 erkennt einen Kurzschluss, aber die anschließende Nachmessung durch die beiden Messeinrichtungen 11, 13 ist negativ, hilfreich.

Idealerweise ist es nun leicht möglich, die Eingangssignalfilter 3, 7 der Eingangsmessgrößen, insbesondere der Spannung als Abbild des Stromes, unterschiedlich auszulegen. Eine schnellstmögliche Kurzschlusserkennung erfordert Eingangssignalfilter 3, deren Tiefpasscharakter nicht zu stark ausgelegt ist, um steile Flanken im Anstieg möglichst wenig zu bedämpfen. Für die Überlastauslösung ist es aber bedeutsam, Fehler der Abtastung, d.h. die Erkennung von fallenden und steigenden Werten, zu vermeiden. Auf Grund des zeitunkritischeren Sachverhalts ist die Filterung schneller Transienten und Oberwellen besser möglich. Daher sind bei dem ersten Mikrokontroller 6, der für die Überlasterkennung zuständig ist, Eingangssignalfilter 7 mit Tiefpasscharakter bzw. Eingangssignalfilter höherer Ordnung vorteilhaft.

Auf Grund der Funktionsteilung ergeben sich auch unterschiedliche Messbereiche der Messalgorithmen 11, 13, d.h. insbesondere des Analog-Digital-Wandlers, im zweiten Mikroprozessor 2. Das hat positiv zur Folge, dass die Anforderungen an die Genauigkeit und Auflösung der Messeinrichtungen 11, 13 entsprechend verringert werden können.

Mit der Schachtelung des Kurzschlussalgorithmus ist es möglich, sehr harte Kurzschlüsse, z.B. dem 100-fachen der Bemessungsstromstärke IN, besonders schnell abzuschalten, um mögliche Schäden am angeschlossenen Verbraucher des Schutzschaltgerätes 1 zu vermeiden. Dabei kann in diesem Fall auf Genauigkeit verzichtet werden. Weniger harte Kurzschlüsse, z.B. $15 \times I_N$, bei denen etwas mehr Zeit zur Verfügung steht, müssen dann mit höherer Genauigkeit nachgemessen werden.

Die Schachtelung über den Komparatorinterrupt, schnelles Messen und genaueres Messen erlaubt eine schnelle Kurzschlussdetektion bei gleichzeitig hoher Störsicherheit.

**Patentansprüche**

1. Schutzschaltgerät (1) zum Überwachen des elektrischen Stromflusses zu einem elektrischen Verbraucher, aufweisend eine Schaltfunktionalität, eine Überstromauslösefunktionalität und eine Kurzschlussauslösefunktionalität, aufweisend einen ersten Mikrokontroller (6) mit einem ersten Eingangssignalfilter (7), wobei der erste Mikrokontroller (6) zur Überwachung der Überstromauslösefunktionalität ausgebildet ist und ein zweiter Mikrokontroller (2) mit einem zweiten Eingangssignalfilter (3) vorgesehen ist, der zur Überwachung der Kurzschlussauslösefunktionalität ausgebildet ist, **dadurch gekennzeichnet dass** die beiden Eingangssignalfilter (3, 7) unterschiedlich ausgelegt sind, und dass die Schaltfunktionalität in einem der beiden Mikrokontroller (2, 6) vorgesehen ist.

2. Schutzschaltgerät (1) nach Anspruch 1, **dadurch gekennzeichnet, dass** der erste Mikrokontroller (6) die Schaltfunktionalität und die Überstromauslösefunktionalität aufweist.

3. Schutzschaltgerät (1) nach einem der Ansprüche 1 bis 2, **dadurch gekennzeichnet, dass** der zweite Mikrokontroller (2) einen Komparator (10) und wenigstens zwei dem Komparator (10) nachgeschaltete, nacheinander angeordnete, Messeinrichtungen (11, 13) und Vergleichseinheiten (12, 14) zur Messung der Stromstärke bzw. der Spannung und zum Vergleichen der gemessenen Stromstärke bzw. der Spannung mit Referenzstromstärken bzw. Referenzspannungen und eine den Messeinrichtungen (11, 13) nachgeschaltete Auslösesignaleinheit (15) aufweist.

4. Schutzschaltgerät (1) nach Anspruch 3, **dadurch gekennzeichnet, dass** die erste Messeinrichtung (11) eine geringere Auflösung als die nachgeschaltete zweite Messeinrichtung (13) aufweist.

5. Schutzschaltgerät (1) nach Anspruch 3 oder 4, **dadurch gekennzeichnet, dass** die erste (11) und die zweite Messeinrichtung (13) jeweils einen Analog-Digital-Wandler aufweisen.

6. Schutzschaltgerät (1) nach Anspruch 5, **dadurch gekennzeichnet, dass** der Analog-Digital-Wandler der ersten Messeinrichtung (11) eine 4- bis 8-Bit-Auflösung und der Analog-Digital-Wandler der zweiten Messeinrichtung (13) eine 9- oder 10-Bit-Auflösung aufweist.

7. Schutzschaltgerät (1) nach einem der Ansprüche 1 bis 6, **dadurch gekennzeichnet, dass** der Tiefpasscharakter des ersten Eingangssignalfilters (7) des ersten Mikrokontrollers (6) höher ausgelegt ist als der Tiefpasscharakter des zweiten Eingangssignalfilters (3) des zweiten Mikrokontrollers (2).

8. Schutzschaltgerät (1) nach einem der Ansprüche 1 bis 7, **dadurch gekennzeichnet, dass** das Schutzschaltgerät (1) ein Mehrfunktionsniederspannungsschaltgerät oder ein Leistungsschalter mit elektronischem Überstromschutz ist.

9. Verfahren zur Überwachung des elektrischen Stromflusses zu einem elektrischen Verbraucher durch ein Schutzschaltgerät (1), bei dem ein erster Eingangssignalfilter (7) eines ersten Mikrokontrollers (6) den Signalverlauf des Stromflusses bzw. der Spannung überwacht und bei dem der erste Mikrokontroller (6) bei Feststellung einer Überlast ein Fehlersignal und/oder ein Auslösesignal erzeugt, und bei dem ein zweiter Eingangssignalfilter (3) eines zweiten Mikrokontrollers (2) den Signalverlauf des Stromflusses bzw. der Spannung überwacht und bei dem der zweite Mikrokontroller (2) bei Feststellung eines Kurzschlusses ein Auslösesignal erzeugt, wobei die beiden Eingangssignalfilter (3, 7) unterschiedlich ausgelegt sind und wobei der Stromfluss nach Erzeugung eines Auslösesignals unterbrochen wird.

10. Verfahren nach Anspruch 9, **dadurch gekennzeichnet, dass** der zweite Mikrokontroller (2) einen integrierten Komparator (10) benutzt, der den Signalverlauf des Stromflusses bzw. den Spannungsverlauf überwacht, und dass bei Überschreitung einer Eingangsstromstärke bzw. Eingangsspannung eine erste, dem Komparator (10) nachgeschaltete Messeinrichtung (11) die Stromstärke nachmisst und mit einer ersten Referenzstromstärke vergleicht, und dass bei Feststellung, dass die gemessene Stromstärke die erste Referenzstromstärke überschreitet, die erste Messeinrichtung (11) dem zweiten Mikrokontroller (2) ein Signal zum Erzeugen eines Auslösesignals weiterleitet, oder dass bei Feststellung, dass die gemessene Stromstärke die erste Referenzstromstärke nicht überschreitet, die erste Messeinrichtung (11) einer nachgeschalteten zweiten Messeinrichtung (13) ein Signal weiterleitet, so dass die zweite Messeinrichtung (13) die Stromstärke nochmals nachmisst und mit einer zweiten Referenzstromstärke vergleicht, wobei bei Feststellung, dass die gemessene Stromstärke die zweite Referenzstromstärke überschreitet, die die zweite Messeinrichtung (13) dem zweiten Mikrokontroller (2) ein Signal zum Erzeugen eines Auslösesignals weiterleitet, oder dass bei Feststellung, dass die gemessene Stromstärke die zweite Referenzstromstärke nicht überschreitet, die zweite Messeinrichtung (13) kein Signal zum Erzeugen eines Auslösesignals an den zweiten Mikrokontroller (2) weiterleitet.

11. Verfahren nach einem der Ansprüche 9 bis 10, **dadurch gekennzeichnet, dass** das Schutzschaltgerät zum Durchführen des Verfahrens nach einem der Ansprüche 9 oder 10 gemäß einem Schutzschaltgerät (1) nach einem der Ansprüche 1 bis 8 ausgebildet ist.

12. Verfahren nach einem der Ansprüche 10 bis 11, **dadurch gekennzeichnet, dass** ein erster Messalgorithmus der ersten Messeinrichtung (11) mit einer geringeren Auflösung misst, als ein nachgeschalteter zweiter Messalgorithmus der zweiten Messeinrichtung (13).

13. Verfahren nach Anspruch 12, **dadurch gekennzeichnet, dass** der erste (11) und der zweite Messalgorithmus (13) jeweils eine Analog-Digital-Wandlung benutzen.

14. Verfahren nach einem der Ansprüche 12 bis 13, **dadurch gekennzeichnet, dass** die Analog-Digital-Wandlung des ersten Messalgorithmus eine 4- bis 8-Bit-Auflösung und die Analog-Digital-Wandlung des zweiten Messalgorithmus eine 9- oder 10-Bit-Auflösung benutzen.

15. Verfahren nach einem der Ansprüche 12 bis 14, **dadurch gekennzeichnet, dass** wenigstens einer der Messalgorithmen den Anstieg, d. h. ein sog. Delta, des Stromes benutzt, um ein Kurzschlussereignis sicher zu detektieren.

**Claims**

1. Protective switching device (1) for monitoring the electrical current flow to an electrical load, having a switching functionality, an excess current triggering functionality and a short circuit triggering functionality, having a first microcontroller (6) with a first input signal filter (7), wherein the first microcontroller (6) is configured for monitoring the excess current triggering functionality, and a second microcontroller (2) with a second input signal filter (3) is provided that is configured for monitoring the short circuit triggering functionality, **characterised in that** the two input signal filters (3, 7) are designed differently, and **in that** the switching functionality is provided in one of the two microcontrollers (2, 6).

2. Protective switching device (1) according to claim 1, **characterised in that** the first microcontroller (6) has the switching functionality and the excess current triggering functionality.

3. Protective switching device (1) according to one of claims 1 to 2, **characterised in that** the second microcontroller (2) has a comparator (10) and at least two measuring devices (11, 13) arranged one after the other downstream of the comparator (10), and comparison units (12, 14) for measuring the current intensity or the voltage and for comparing the measured current intensity or voltage with reference current intensities or reference voltages, and a triggering signal unit (15) connected downstream of the measuring devices (11, 13).

4. Protective switching device (1) according to claim 3, **characterised in that** the first measuring device (11) has a lower resolution than the second measuring device (13) connected downstream.

5. Protective switching device (1) according to claim 3 or 4, **characterised in that** the first (11) and the second measuring devices (13) each comprise an analogue-digital converter.

6. Protective switching device (1) according to claim 5, **characterised in that** the analogue-digital converter of the first measuring device (11) has a 4 to 8 bit resolution and the analogue-digital converter of the second measuring device (13) has a 9 or 10 bit resolution.

7. Protective switching device (1) according to one of claims 1 to 6, **characterised in that** the low-pass character of the first input signal filter (7) of the first microcontroller (6) is designed so as to be higher than the low-pass character of the second input signal filter (3) of the second microcontroller (2).

8. Protective switching device (1) according to one of claims 1 to 7, **characterised in that** the protective switching device (1) is a multi-functional low-voltage switching device or a power switch with electronic excess current protection.

9. Method for monitoring the electrical current flow to an electrical load by way of a protective switching device (1), in which a first input signal filter (7) of a first microcontroller (6) monitors the signal characteristic of the current flow or the voltage and in which the first microcontroller (6) generates an error signal and/or a trigger signal when an overload is detected, and in which a second input signal filter (3) of a second microcontroller (2) monitors the signal characteristic of the current flow or the voltage, and in which the second microcontroller (2) generates a trigger signal when a short circuit is detected, wherein the two input signal filters (3, 7) are designed differently and wherein the current flow is interrupted following generation of a trigger signal.

10. Method according to claim 9, **characterised in that** the second microcontroller (2) uses an integrated comparator (10) which monitors the signal characteristic of the current flow or the voltage characteristic, and **in that** a first measuring device (11), connected downstream of the comparator (10), re-measures the current intensity and compares it with a first reference current intensity when an input current intensity or input voltage is exceeded, and **in that** the first measuring device (11) forwards a signal to the second microcontroller (2) to generate a trigger signal when it is detected that the measured current intensity exceeds the first reference current intensity, or the first measuring device (11) forwards a signal to a second measuring device (13) connected downstream when it is detected that the measured current intensity does not exceed the first reference current intensity, so the second measuring device (13) re-measures the current intensity again and compares it with a second reference current intensity, wherein the second measuring device (13) forwards a signal to the second microcontroller (2) to generate a trigger signal when it is detected that the measured current intensity exceeds the second reference current intensity, or the second measuring device (13) does not forward a signal to the second microcontroller (2) to generate a trigger signal when it is detected that the measured current intensity does not exceed the second reference current intensity.

11. Method according to one of claims 9 to 10, **characterised in that** the protective switching device is configured for carrying out the method according to one of claims 9 or 10 in accordance with a protective switching device (1) according to one of claims 1 to 8.

**12.** Method according to one of claims 10 to 11, **characterised in that** a first measuring algorithm of the first measuring device (11) measures at a lower resolution than a second downstream second measuring algorithm of the second measuring device (13).

**13.** Method according to claim 12, **characterised in that** the first (11) and second measuring algorithms (13) each use an analogue-digital conversion.

**14.** Method according to one of claims 12 to 13, **characterised in that** the analogue-digital conversion of the first measuring algorithm uses a 4 to 8 bit resolution and the analogue-digital conversion of the second measuring algorithm uses a 9 or 10 bit resolution.

**15.** Method according to one of claims 12 to 14, **characterised in that** at least one of the measuring algorithms uses the increase, i.e. what is known as a delta, of the current to reliably detect a short circuit occurrence.

**Revendications**

**1.** Disjoncteur de protection (1) destiné à la surveillance du flux de courant électrique parvenant à un consommateur électrique, présentant une fonctionnalité de commutation, une fonctionnalité de déclenchement de surintensité et une fonctionnalité de déclenchement de court-circuit, présentant un premier microcontrôleur (6) avec un premier filtre de signaux entrants (7), dans lequel le premier microcontrôleur (6) est configuré en vue de la surveillance de la fonctionnalité de déclenchement de surintensité et un deuxième microcontrôleur (2) est prévu avec un deuxième filtre de signaux entrants (3), qui est configuré pour la surveillance de la fonctionnalité de déclenchement de court-circuit, **caractérisé en ce que** les deux filtres de signaux entrants (3, 7) sont conçus différemment, et **en ce que** la fonctionnalité de commutation est prévue dans un des deux microcontrôleurs (2, 6).

**2.** Disjoncteur de protection (1) selon la revendication 1, **caractérisé en ce que** le premier microcontrôleur (6) présente la fonctionnalité de commutation et la fonctionnalité de déclenchement de surintensité.

**3.** Disjoncteur de protection (1) selon l'une des revendications 1 à 2, **caractérisé en ce que** le deuxième microcontrôleur (2) présente un comparateur (10) et au moins deux dispositifs de mesure (11, 13) et unités de comparaison (12, 14) disposés l'un derrière l'autre et branchés en aval du comparateur (10) destinés à la mesure de l'intensité du courant resp. de la tension et destinés à la comparaison de l'intensité du courant mesurée resp. de la tension avec des intensités de référence du courant resp. des tensions de référence et une unité de signal de déclenchement (15) branchée en aval des dispositifs de mesure (11, 13).

**4.** Disjoncteur de protection (1) selon la revendication 3, **caractérisé en ce que** le premier dispositif de mesure (11) présente une définition plus faible que le deuxième dispositif de mesure (13) branché en aval.

**5.** Disjoncteur de protection (1) selon la revendication 3 ou 4, **caractérisé en ce que** le premier (11) et le deuxième dispositif de mesure (13) présentent respectivement un convertisseur analogique-numérique.

**6.** Disjoncteur de protection (1) selon la revendication 5, **caractérisé en ce que** le convertisseur analogique-numérique du premier dispositif de mesure (11) présente une définition de 4 à 8 bits et le convertisseur analogique-numérique du deuxième dispositif de mesure (13) présente une définition de 9 ou 10 bits.

**7.** Disjoncteur de protection (1) selon l'une des revendications 1 à 6, **caractérisé en ce que** le caractère passe-bas du premier filtre de signaux entrants (7) du premier microcontrôleur (6) est conçu plus haut que le caractère passe-bas du deuxième filtre de signaux entrants (3) du deuxième microcontrôleur (2).

**8.** Disjoncteur de protection (1) selon l'une des revendications 1 à 7, **caractérisé en ce que** le disjoncteur de protection (1) est un disjoncteur basse tension à fonctions multiples ou un commutateur de puissance avec une protection électronique contre les surintensités.

**9.** Procédé destiné à la surveillance du flux de courant électrique parvenant à un consommateur électrique par le biais d'un disjoncteur de protection (1), dans lequel un premier filtre de signaux entrants (7) d'un premier microcontrôleur (6) surveille la courbe de signal du flux de courant resp. de la tension et dans lequel le premier microcontrôleur (6) génère un signal d'erreur et/ou un signal de déclenchement lors de la constatation d'une surcharge et dans lequel un deuxième filtre de signaux entrants (3) d'un deuxième microcontrôleur (2) surveille la courbe de signal du flux de courant resp. de la tension et dans lequel le deuxième microcontrôleur (2) génère un signal de déclenchement lors de la constatation d'un court-circuit, dans lequel les deux filtres de signaux entrants (3, 7) sont conçus différemment et dans lequel le flux de courant est interrompu après la génération d'un signal de déclenchement.

**10.** Procédé selon la revendication 9, **caractérisé en ce que** le deuxième microcontrôleur (2) utilise un comparateur intégré (10) qui surveille la courbe de signal du flux de courant resp. la courbe de tension, et **en ce que** lors du dépassement d'une intensité de courant entrante resp. d'une tension entrante un premier dispositif de mesure (11) branché en aval du comparateur (10) mesure l'intensité de courant et la compare avec une première intensité de courant de référence, et **en ce que** lors de la constatation que l'intensité de courant mesurée dépasse la première intensité de courant de référence, le premier dispositif de mesure (11) achemine au deuxième microcontrôleur (2) un signal destiné à la génération d'un signal de déclenchement, ou **en ce que** lors de la constatation que l'intensité de courant mesurée ne dépasse pas la première intensité de courant de référence, le premier dispositif de mesure (11) achemine un signal à un deuxième dispositif de mesure (13) branché en aval de sorte que le deuxième dispositif de mesure (13) mesure encore une fois l'intensité de courant et la compare avec une deuxième intensité de courant de référence, dans lequel lors de la constatation que l'intensité de courant mesurée dépasse la deuxième intensité de courant de référence, le deuxième dispositif de mesure (13) achemine au deuxième microcontrôleur (2) un signal destiné à générer un signal de déclenchement, ou **en ce que** lors de la constatation que l'intensité de courant mesurée ne dépasse pas la deuxième intensité de courant de référence, le deuxième dispositif de mesure (13) n'achemine aucun signal destiné à générer un signal de déclenchement au niveau du deuxième microcontrôleur (2).

**11.** Procédé selon l'une des revendications 9 à 10, **caractérisé en ce que** le disjoncteur de protection est configuré en vue de l'exécution du procédé selon l'une des revendications 9 ou 10 conformément à un disjoncteur de protection (1) selon l'une des revendications 1 à 8.

**12.** Procédé selon l'une des revendications 10 à 11, **caractérisé en ce qu'**un premier algorithme de mesure du premier dispositif de mesure (11) prend une mesure avec une définition plus faible qu'un deuxième algorithme de mesure du deuxième dispositif de mesure (13) branché en aval.

**13.** Procédé selon la revendication 12, **caractérisé en ce que** le premier (11) et le deuxième (13) algorithme de mesure utilisent respectivement une conversion analogique-numérique.

**14.** Procédé selon l'une des revendications 12 à 13, **caractérisé en ce que** la conversion analogique-numérique du premier algorithme de mesure utilise une définition de 4 à 8 bits et la conversion analogique-numérique du deuxième algorithme de mesure utilise une résolution de 9 ou 10 bits.

**15.** Procédé selon l'une des revendications 12 à 14, **caractérisé en ce qu'**au moins un des algorithmes de mesure utilise l'augmentation, c'est-à-dire ce que l'on appelle un delta, du courant pour détecter en toute sécurité un événement de court-circuit.

## FIG 1

## FIG 3

EP 2 250 718 B1

FIG 2

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6292717 B